# EUROPEAN PATENT APPLICATION

(11) **EP 3 315 615 A1**
(43) Date of publication of application: **02.05.2018**
(21) Application number: 16196294.9
(22) Date of filing: 28.10.2016
(51) Int. Cl.: C21C 5/46, B66C 17/10, C21C 5/52, C21C 7/00, F27B 14/08

(54) **MANIPULATOR FOR A LADLE**

(71) Applicant: Danieli Corus BV, 1951 ME Velsen Noord (NL)
(72) Inventor: KLOETSTRA, Klaas, Richard, 1619 BP Andijk (NL); VORTREFFLICH, Walter, 3761 AX Soest (NL); GOOTJES, Peter, 1829 CP Oudorp (NL)
(74) Representative: De Vries & Metman

(57) **Abstract**

Manipulator for moving a ladle for processing liquid steel, the manipulator comprising a frame with wheels movable along suspended rails, a gripper, such as a pair of parallel hooks, extending from a lower side of the frame, and a hook suspension with a drive for moving the hooks relative to the frame between a lower position and an upper position.

## Description

The invention relates to a manipulator for a ladle for transporting hot metal, in particular liquid iron, e.g., in a desulphurization station. The invention also pertains to a processing station comprising such a manipulator.

Desulphurization of hot metal during steel production serves to improve mechanical properties. The desulphurization typically takes place in a closed station. Hitherto, hot metal is supplied in a ladle, typically carried by a heavy overhead crane and put on a transfer car which can be moved along rails on the floor between a position in front of the desulphurization station and a position within the desulphurization station. When the transfer car is in the desulphurization station, the station is closed off and desulphurization agents are injected into the hot metal. Fumes develop and are discharged. After the desulphurization process is finished the ladle is tilted into a so-called skimming position in order to remove the slag floating on the hot metal. The slag is rich in chemically bond sulfur.

A drawback of the existing systems is that in a conventional plant lay-out heavy cranes are needed to position the filled ladles onto the transfer cars. In the processing station lifting and tilting the ladle in the skimming position generates high loads which requires robust constructional support and application of heavy hydraulics. Moreover, in some older steel production sites such desulphurization stations are not present. If such sites are to be upgraded by implementation of a desulphurization station, it can be difficult to fit such desulphurization stations into the original lay-out of the production site.

It is an object of the invention to provide an arrangement for a desulphurization station which can be more easily integrated in existing plant lay-outs and which may require less radical constructional measures.

The object of the invention is achieved by a manipulator for moving a ladle for steel production, comprising a frame with wheels movable along suspended rails, a gripper, for example a pair of parallel hooks, extending from a lower side of the frame, and a gripper suspension with a drive for moving the hooks relative to the frame between a lower position and an upper position.

Using such a manipulator, no lifting equipment is required for positioning the ladle onto a carriage. Other, more compact systems can be used for the delivery of the ladles, consuming less space. This makes it possible to implement the system of the present invention in existing production facilities that would not allow implementation of prior art systems.

When the ladle is in the processing station, it merely needs to be tilted , which results in substantially less loads compared to the combined lifting and tilting required with prior art systems.

To tilt the ladle, the manipulator may comprise a third hook at a distance in front of two hooks and a second drive for lifting and lowering the third hook when the parallel hooks are in the upper position.

In a specific embodiment the hook suspension comprises a sub-frame supporting the parallel hooks and a set of hydraulic jacks supported by the main frame and supporting the sub-frame for moving the sub-frame with the hooks between said upper and lower positions.

To facilitate efficient discharge of process gases or fumes the main frame and the sub-frame are open frames with an open space between the two parallel hooks.

The third hook can be suspended from the sub-frame, for instance by means of a set of pulleys.

An alternative gripper suspension may for example comprise an eccentric cam and/or a lever arm.

The ladles can for example be the usual transfer ladles commonly used with the production of steel or iron. Such ladles are cylindrical containers having two aligned cylindrical lifting axles or trunnions extending radially at opposite sides, about halfway the height of the ladle, allowing the hooks to pick-up the ladle and allow pivoting of the ladle. The ladles further comprise a loop for engaging a gripper for tilting the ladle after the ladle is lifted. The loop is near the bottom at even distances from the two trunnions.

The manipulator is particularly useful in a processing station, in particular a desulphurization station, for processing hot metal comprising a compartment set with a closable port, a set of suspended rails for carrying the manipulator.

The invention will be further explained with reference to the accompanying drawings, showing exemplary embodiments.
Figure 1: shows in side view an exemplary embodiment of a manipulator carrying a ladle;
Figure 2: shows the manipulator of Figure 1 in top view;
Figure 3A-D: show consecutive steps of the manipulator of Figure 1 in use;
Figure 4: shows an alternative for the step of Figure 3D;
Figure 5: shows an alternative exemplary embodiment of a manipulator;
Figure 6: shows a third exemplary embodiment of a manipulator.

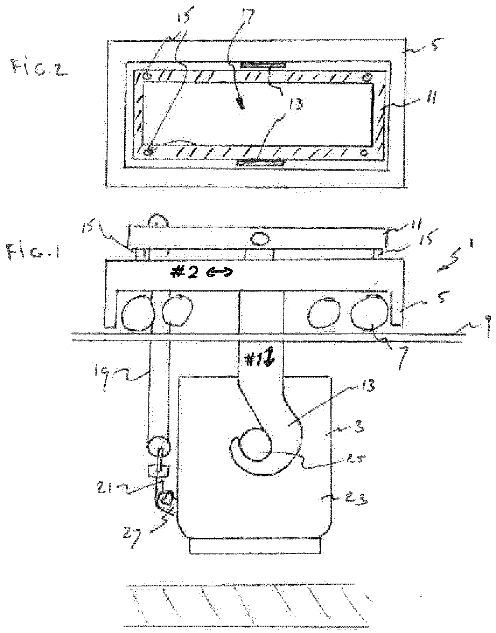

Figure 1 shows a manipulator 1 carrying and moving a ladle 3 filled with liquid iron coming from a blast furnace. The manipulator 1 comprises a main frame 5 with wheels 7 movable along suspended rails 9 at a level above floor level, and a sub-frame 11 carrying a pair of parallel hooks 13. The rectangular sub-frame 11 is supported by four hydraulic jacks 15, which are in turn supported by the main frame 5. A control unit (not shown) is programmed to control the jacks 15 for moving the sub-frame 11 together with the hooks 13 between a lower position and an upper position.

In an alternative embodiment the sub-frame 11 hangs down from the main frame 5 and is suspended from the jacks 15.

The main frame 5 and the sub-frame 11 are rectangular open frames. The space 17 between the two parallel hooks remains open, a(see top view in Figure 2), so the frames 5, 11 do not hinder the discharge of any fumes or gases resulting from the desulphurization process.

The two parallel hooks are pivotingly supported by two opposite longer sides of the rectangular sub-frame. The width of the sub-frame 11 is such that the distance between the two parallel hooks 13 corresponds to the width of a usual transfer ladle 3.

The sub-frame 11 also carries a pulley mechanism 19 for suspending, lifting and lowering a third hook 21. This third hook 21 is suspended from a central section of a short side of the sub-frame 11. When the sub-frame 11 is lifted by the jacks 15, the two parallel hooks 13 and the third hook 21 are also lifted. When the sub-frame 11 is in the upper position, the control unit can lift the third hook 21 by means of a drive (not shown).

The manipulator 1 is configured to lift and tilt a standard ladle 3, as the ladle 3 shown in Figure 1. The ladle 3 comprises a cylindrical container 23 with two aligned cylindrical trunnions 25 at opposite sides, about halfway the height of the ladle 3. The hooks 13 are configured to grip around the trunnions 25 and pick-up the ladle 3. The ladle 3 further comprises a loop 27 near the bottom at even distances from the two trunnions 25. The third hook 21 is configured to engage this loop 27. Lifting the third hook 21 will tilt the lifted ladle 3.

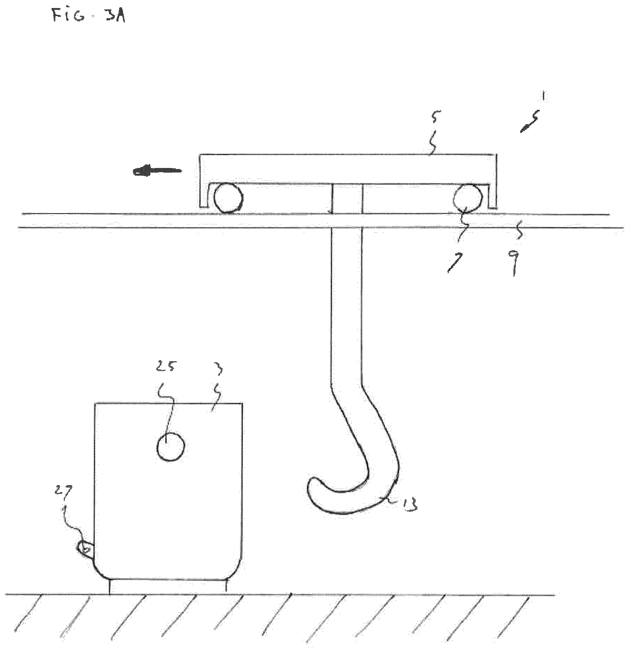

In Figure 3A a ladle 3 has just been delivered by a transporter, e.g., by a crane or a wagon or the like. The ladle 3 is centrally positioned between the two suspended rails 9, with its loop 27 pointing away from a desulphurization station (not shown). A manipulator 1 of the type shown in Figure 1 is moved along the suspended rails 9 towards the ladle 3. The sub-frame 11 is in its lowest position. In this position the sub-frame 11 is not visible and sunk within the main frame 5. The third hook 21 is retracted and also not visible.

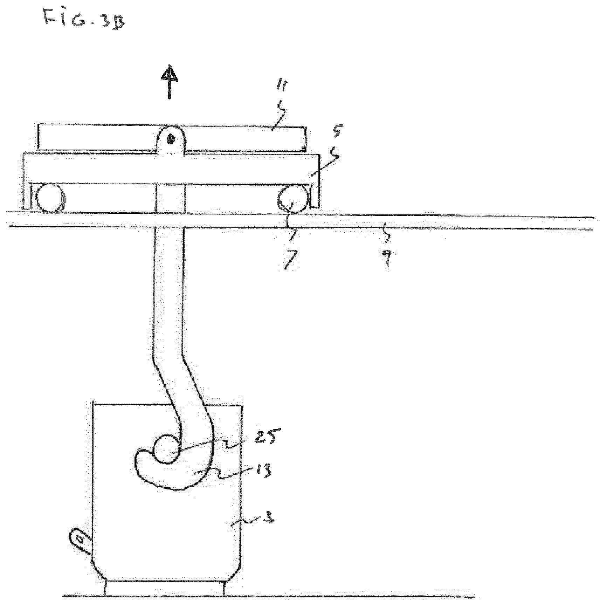

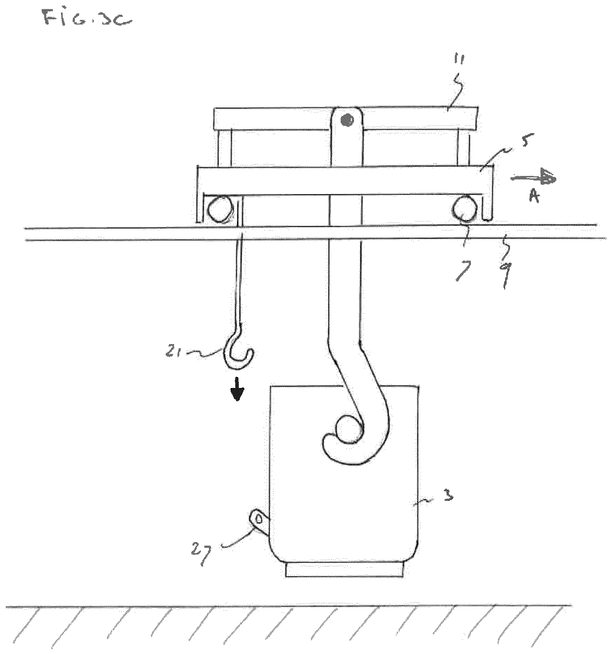

When the hooks 13 are at a position just below the trunnions 25 of the ladle 3, the sub-frame 11 is lifted and the hooks 13 grip the trunnions 25 (Figure 3B). The third hook 21 is lowered (Figure 3C) while the manipulator 1 moves in the direction A into the desulphurization station.

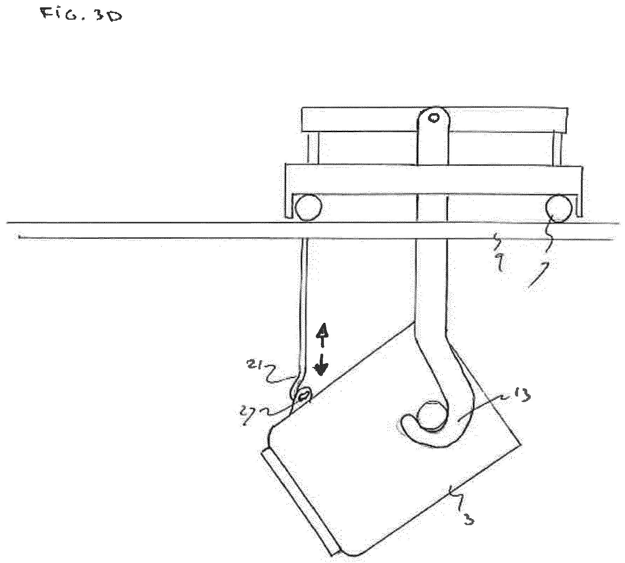

When the manipulator 1 and the ladle 3 are within the desulphurization compartment, the doors (not shown) of the compartment close in order to provide a closed environment. In this closed compartment desulphurization agents are added to the hot metal in the ladle. Resulting fumes and gases are discharged from the desulphurization station. A floating slag layer develops on the surface of the hot metal. This slag layer needs to be removed. To this end, the third hook 21 is lowered to engage the loop 27 of the ladle 3. After hooking the loop 27 the third hook 21 is hoisted, so the ladle 3 is tilted (see Figure 3D) and the floating slag layer drifts from the ladle 3 and is collected in a reservoir (not shown).

After finishing the desulphurization process, the ladle 3 is tilted back and carried out off the desulphurization station, where it can be picked up by a next transporter, such as a railway track with a transfer car or a ladle carrier.

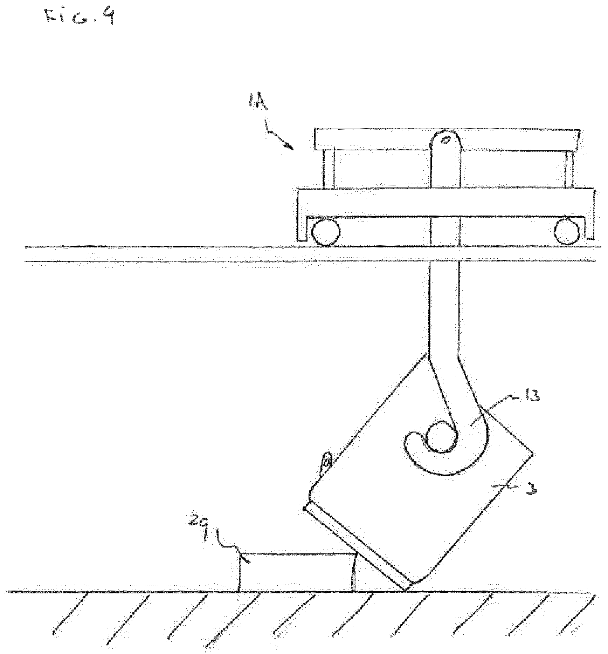

Figure 4 shows an alternative embodiment of the manipulator 1A without a third hook 21. In the desulphurization process, the ladle 3 is tilted by unstably positioning one side of the ladle 3 onto a small platform or block 29, allowing the unsupported part of the ladle 3 to tilt down under the ladle's weight.

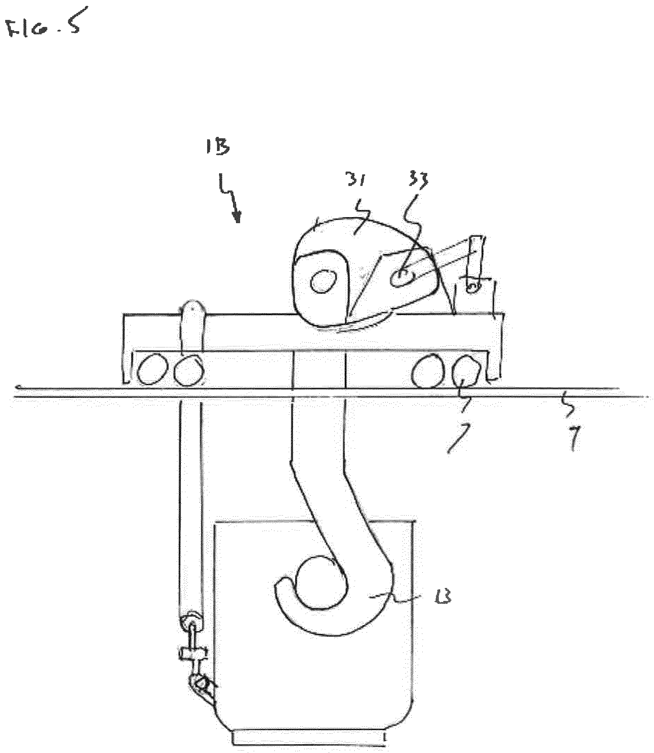

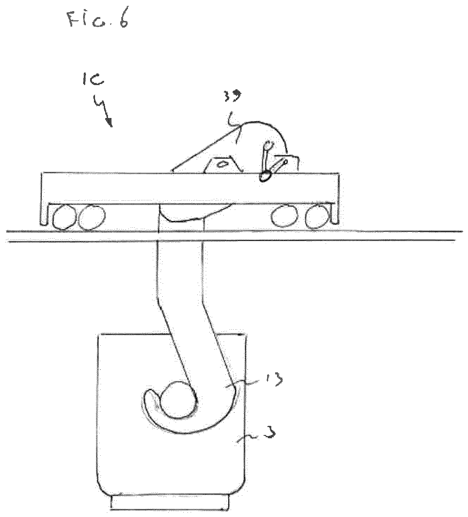

Figure 5 shows a further alternative embodiment of a manipulator 1B. Instead of using a sub-frame 11 lifted by jacks 15, the hooks 13 are lifted by a lever 31 driven by a cam shaft 33. Alternatively, a lever 35 can be used to lift the hooks 13, as for example is shown with the embodiment in Figure 6.

## Claims

1. Manipulator for moving a ladle for processing liquid steel, the manipulator comprising a frame with wheels movable along suspended rails, a gripper extending from a lower side of the frame, and a gripper suspension with a drive for moving the gripper relative to the frame between a lower position and an upper position.

2. Manipulator according to claim 1, wherein the gripper comprises a pair of parallel hooks spaced by a distance corresponding to the width of the ladle.

3. Manipulator according to claim 2, comprising a third hook at a distance in front of two hooks and a second drive for lifting and lowering the third hook when the parallel hooks are in the upper position.

4. Manipulator according to claim 1, 2 or 3, wherein the hook suspension comprises a sub-frame supporting the parallel hooks and a set of hydraulic jacks supported by the main frame and supporting the sub-frame for moving the sub-frame with the hooks between said upper and lower positions.

5. Manipulator according to claim 4, wherein the main frame and the sub-frame are open frames with an open space between the two parallel hooks.

6. Manipulator according to claim 3 and 4, wherein the third hook is suspended from the sub-frame.

7. Manipulator according to claim 6, wherein the suspension of the third hook comprises a set of pulleys.

8. Manipulator according to claim 1 or 2, wherein the gripper suspension comprises an eccentric cam.

9. Manipulator according to claim 1 or 2, wherein the gripper suspension comprises a lever arm.

10. Processing station for processing hot metal comprising a compartment set with a closable port, a set of suspended rails and a manipulator according to any preceding claim, being movable via the suspended rails between a position outside the compartment and a position within the compartment.

11. Processing station according to claim 10, the station being a desulphurization station.
